# EUROPEAN PATENT SPECIFICATION

(11) **EP 3 806 286 B1**
(45) Date of publication and mention of the grant of the patent: **28.12.2022**
(21) Application number: 18920835.8
(22) Date of filing: 28.05.2018
(51) Int. Cl.: H02J 50/90, H02J 7/00, H02J 50/10, B60L 53/39

(54) **DEFROSTING METHOD FOR POWER TRANSMISSION DEVICE, WIRELESS POWER SUPPLY SYSTEM, AND POWER TRANSMISSION DEVICE**
ABTAUVERFAHREN FÜR EINE ENERGIEÜBERTRAGUNGSVORRICHTUNG, KONTAKTLOSES ENERGIEVERSORGUNGSSYSTEM UND ENERGIEÜBERTRAGUNGSVORRICHTUNG
PROCÉDÉ DE DÉGIVRAGE DE DISPOSITIF DE TRANSMISSION D'ÉNERGIE DANS UN SYSTÈME DE TRANSMISSION D'ÉNERGIE SANS FIL, ET DISPOSITIF DE TRANSMISSION D'ÉNERGIE

(43) Date of publication of application: 14.04.2021
(73) Proprietor: NISSAN MOTOR CO., LTD., Yokohama-shi, Kanagawa 221-0023 (JP)
(72) Inventor: OZAKI, Michio, Atsugi-shi, Kanagawa 243-0123 (JP)
(74) Representative: Hoefer & Partner Patentanwälte mbB
(86) International application number: PCT/JP2018/020365
(87) International publication number: WO 2019/229806

(56) References cited:
- DE-A1-102015 006 307
- DE-A1-102015 006 308
- JP-A- 2012 010 559
- JP-A- 2014 113 021
- JP-A- 2016 106 512
- JP-A- 2016 127 078
- JP-A- 2017 512 452
- US-A1- 2018 134 164

## Description

### TECHNICAL FIELD

The present invention relates to a defrosting method for a power transmission device, a wireless power supply system, and a power transmission device.

### BACKGROUND ART

Techniques are known that supply electricity in a wireless manner from a power transmission coil located on the ground to a power reception coil mounted on a vehicle (Patent Literature 1). The invention disclosed in Patent Literature 1 uses a lifting mechanism to move a movable part (the power transmission coil) in the upper-lower direction.

### CITATION LIST

### PATENT LITERATURE

Patent Literature 1: International Publication WO 2015 / 128 450 A1
Prior art document DE 10 2015 006 307 A1 discloses a charging device for inductively charging an electrical energy store of a motor vehicle, having a primary coil, which is designed for inducing a voltage in a secondary coil of the motor vehicle for charging the electrical energy store, and having a lifting mechanism which is designed to move the primary coil between a stowage position and a charging position. A power electronics of the charging device is coupled in heat-conducting manner to the lifting mechanism.

### SUMMARY OF INVENTION

The lifting mechanism may be frozen during a season in which the temperature is low such as winter. The lifting mechanism, if being frozen, cannot move the movable part, hindering the start of power charge. Patent Literature 1 fails to mention this problem, which needs to be dealt with.

In view of the foregoing problem, the present invention provides a defrosting method for a power transmission device, a wireless power supply system, and a power transmission device allowing a constant movement of a movable part even during a low-temperature season such as winter.

The object underlying the present invention is achieved by a defrosting method for a power transmission device according to claim 1 and by a power transmission device according to claim 2. Preferred embodiments are defined in the respective dependent claims. A power transmission device according to an aspect of the present invention includes a movable part configured to come up and down with respect to the ground, and an elevating mechanism arranged on the lower side of the movable part in a vertical direction and configured to move the movable part up and down. The movable part includes a power transmission coil for supplying electric power via a wireless connection to a power reception coil, and a flat nonmagnetic plate provided on the lower side of the power transmission coil in the vertical direction. The nonmagnetic plate has a penetration part penetrating in the vertical direction. A defrosting method for the power transmission device measures a temperature of the power transmission device, and compares the measured temperature with a threshold preliminarily set for determining a freeze of the power transmission device so as to determine whether the power transmission device is frozen. The defrosting method for the power transmission device excites the power transmission coil when determining that the power transmission device is frozen.

### ADVANTAGEOUS EFFECTS

Lines of magnetic force generated in the power transmission coil pass through the penetration part to reach the elevating mechanism. The elevating mechanism is thus heated and defrosted. This enables the movable part to be constantly moved up and down even during a low-temperature season such as winter.

### BRIEF DESCRIPTION OF DRAWINGS

[Fig. 1] Fig. 1 is a schematic configuration diagram illustrating a wireless power supply system according to an embodiment of the present invention.
[Fig. 2] Fig. 2 is a schematic circuit diagram of a wireless power supply according to the embodiment of the present invention.
[Fig. 3A] Fig. 3A is a diagram for explaining a power transmission device and a movable part according to the embodiment of the present invention.
[Fig. 3B] Fig. 3B is a diagram for explaining the power transmission device and the movable part according to the embodiment of the present invention.
[Fig. 4A] Fig. 4A is a schematic diagram of the power transmission device according to the embodiment of the present invention as viewed from above.
[Fig. 4B] Fig. 4B is a schematic diagram of magnetic flux distribution as viewed in direction A-A in Fig. 4A.
[Fig. 5A] Fig. 5A is a diagram for explaining a comparative example.
[Fig. 5B] Fig. 5B is a schematic diagram of magnetic flux distribution as viewed in direction A-A in Fig. 5A.
[Fig. 6] Fig. 6 is a diagram for explaining a mechanism of leakage of magnetic flux depending on the presence or absence of cuts.
[Fig. 7] Fig. 7 is a diagram for explaining a mechanism of leakage of magnetic flux depending on the presence or absence of cuts.
[Fig. 8A] Fig. 8A is a schematic diagram of a power transmission device according to a modified example of the present invention as viewed from above.
[Fig. 8B] Fig. 8B is a schematic diagram of a power transmission device according to a modified example of the present invention as viewed from above.
[Fig. 8C] Fig. 8C is a schematic diagram of a power transmission device according to a modified example of the present invention as viewed from above.
[Fig. 8D] Fig. 8D is a schematic diagram of a power transmission device according to a modified example of the present invention as viewed from above.
[Fig. 9A] Fig. 9A is a schematic diagram illustrating a power transmission device according to a modified example of the present invention.
[Fig. 9B] Fig. 9B is a schematic diagram illustrating the power transmission device according to the modified example of the present invention.
[Fig. 9C] Fig. 9C is a schematic diagram illustrating the power transmission device according to the modified example of the present invention as viewed from above.
[Fig. 10] Fig. 10 is a schematic diagram illustrating a power transmission device according to a modified example of the present invention as viewed from above.
[Fig. 11A] Fig. 11A is a schematic diagram illustrating a power transmission device according to a modified example of the present invention.
[Fig. 11B] Fig. 11B is a schematic diagram illustrating the power transmission device according to the modified example of the present invention.
[Fig. 11C] Fig. 11C is a schematic diagram illustrating the power transmission device according to the modified example of the present invention as viewed from above.
[Fig. 12A] Fig. 12A is a schematic diagram illustrating a power transmission device according to a modified example of the present invention as viewed from above.
[Fig. 12B] Fig. 12B is a schematic diagram illustrating a power transmission device according to a modified example of the present invention as viewed from above.
[Fig. 12C] Fig. 12C is a schematic diagram illustrating a power transmission device according to a modified example of the present invention as viewed from above.
[Fig. 13] Fig. 13 is a schematic diagram illustrating a power transmission device according to a modified example of the present invention.
[Fig. 14A] Fig. 14A is a schematic diagram illustrating a power transmission device according to a modified example of the present invention.
[Fig. 14B] Fig. 14B is a schematic diagram illustrating the power transmission device according to the modified example of the present invention.
[Fig. 15A] Fig. 15A is a schematic diagram illustrating a power transmission device according to a modified example of the present invention.
[Fig. 15B] Fig. 15B is a schematic diagram illustrating the power transmission device according to the modified example of the present invention.
[Fig. 16A] Fig. 16A is a schematic diagram illustrating a power transmission device according to a modified example of the present invention as viewed from above.
[Fig. 16B] Fig. 16B is a schematic diagram of magnetic flux distribution as viewed in direction A-A in Fig. 16A.
[Fig. 17] Fig. 17 is a flowchart for explaining an example of operation of the wireless power supply system according to the embodiment of the present invention.
[Fig. 18] Fig. 18 is a flowchart for explaining an example of operation of the wireless power supply system according to the embodiment of the present invention.
[Fig. 19] Fig. 19 is a flowchart for explaining an example of operation of the wireless power supply system according to the embodiment of the present invention.
[Fig. 20] Fig. 20 is a flowchart for explaining an example of operation of the wireless power supply system according to the embodiment of the present invention.
[Fig. 21] Fig. 21 is a flowchart for explaining an example of operation of the wireless power supply system according to the embodiment of the present invention.

### DESCRIPTION OF EMBODIMENTS

An embodiment of the present invention will be described below with reference to the drawings. The same elements described with reference to the respective drawings are denoted by the same reference numerals, and overlapping explanations are not made below.

### (Configuration of Wireless Power Supply System)

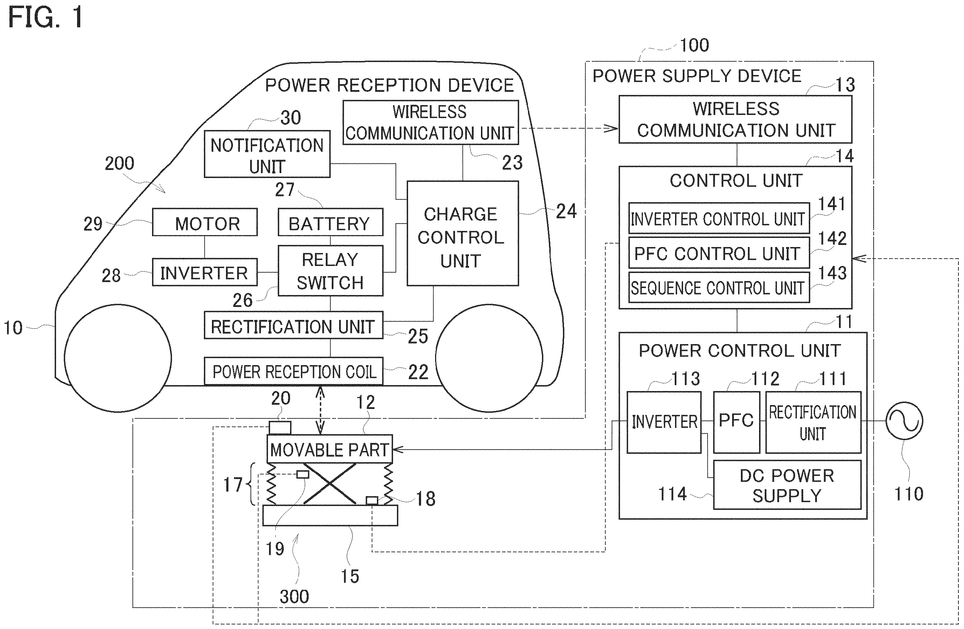

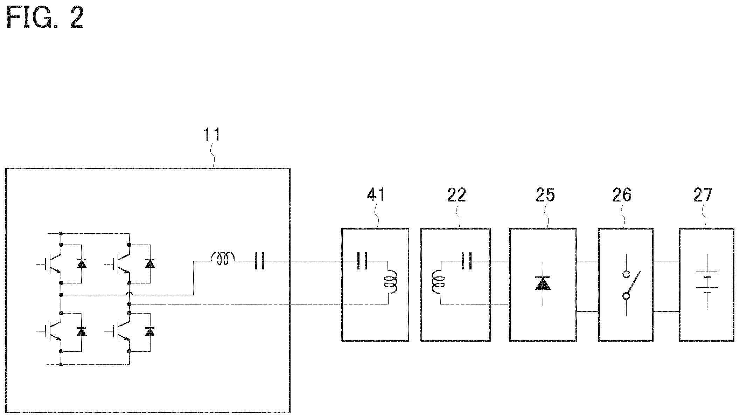

A configuration of a wireless power supply system is described below with reference to Fig. 1 and Fig. 2. As illustrated in Fig. 1, the wireless power supply system includes a power supply device 100 which is a ground-side unit, and a power reception device 200 which is a vehicle-side unit. The wireless power supply system is configured to supply electric power via a wireless connection from the power supply device 100 placed in a power supply station, for example, to the power reception device 200 mounted on a vehicle 10 such as an electric vehicle and a hybrid vehicle so as to charge a battery 27 mounted on the vehicle 10.

The power supply device 100 includes a power transmission device 300 placed in a parking space located adj acent to the power supply station. The power transmission device 300 includes a movable part 12, a fixed part 15, an elevating mechanism 17, a drive control unit 18, a temperature sensor 19, and a distance sensor 20. The movable part 12 includes a power transmission coil 41 (refer to Fig. 2). The power reception device 200 includes a power reception coil 22 mounted on the bottom of the vehicle 10. The power reception coil 22 is arranged so as to be opposed to the power transmission coil 41 when the vehicle 10 is parked at a predetermined position (a power-supply available position) in the parking space. The power reception coil 22 may be installed in a swingable manner via a swinging structure under the floor of the vehicle 10. The movable part 12 and the power reception device 200 may include a resonance capacitor.

The power transmission coil 41 (refer to Fig. 2), which is a primary coil of a litz wire, transmits electric power to the power reception coil 22. The power reception coil 22, which is a secondary coil of a litz wire, receives the electric power from the power transmission coil 41. The electromagnetic induction between the respective coils enables the power supply from the power transmission coil 41 to the power reception coil 22 in a wireless manner. The power supply in the wireless manner is not limited to a means of the electromagnetic induction, and may be a means of magnetic resonance, for example.

The fixed part 15 is a device fixed on the ground. The movable part 12 is moved up and down with respect to the fixed part 15, namely, comes up and down with respect to the ground.

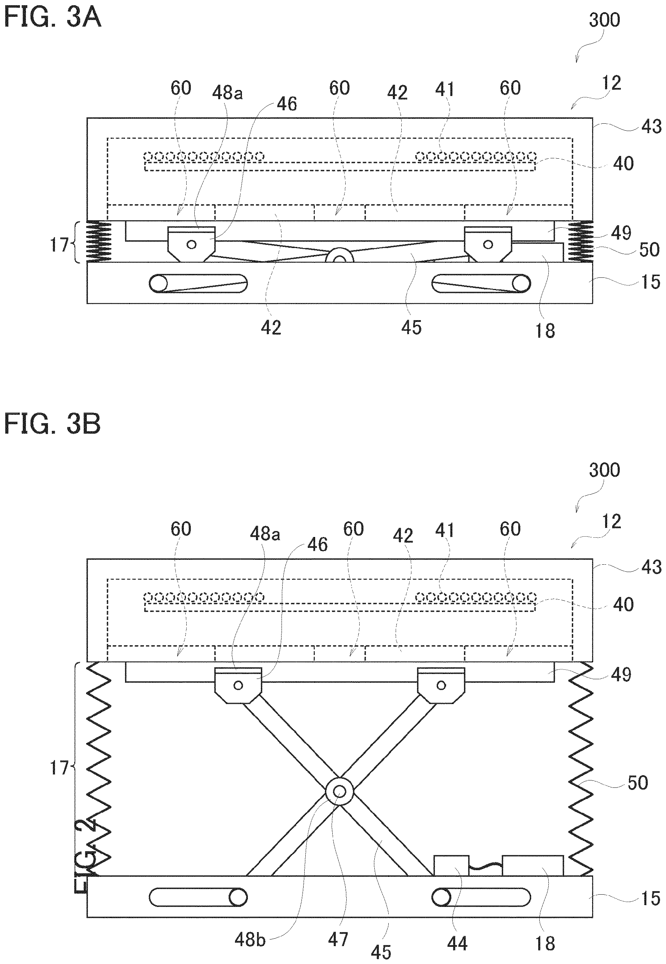

The drive control unit 18 receives a signal from a control unit 14 to control an actuator 44 (refer to Fig. 3B) in accordance with the signal received. The drive control unit 18 and the actuator 44 are described in detail below.

The elevating mechanism 17 receives the power from the actuator 44 to move the movable part 12 up and down in the vertical direction or stop the movable part 12.

The temperature sensor 19 measures a temperature of the power transmission device 300. The temperature sensor 19 may measure a temperature of swing parts (slide swing parts 46 and rotation swing parts 47) regarding the elevating mechanism 17. The temperature sensor 19 sends the measured temperature to the control unit 14.

The distance sensor 20 measures a distance between the movable part 12 and the power reception coil 22. The distance sensor 20 sends the measured distance to the control unit 14. The control unit 14 controls the drive control unit 18 in accordance with the temperature acquired from the temperature sensor 19 or the distance acquired from the distance sensor 20. The control unit 14 may control the drive control unit 18 in accordance with both the temperature acquired from the temperature sensor 19 and the distance acquired from the distance sensor 20. Although not illustrated, the movable part 12 may include a foreign-matter detection coil. The foreign-matter detection coil as used herein is a coil for detecting a change in inductance on the surface of the power transmission device 300 to detect metallic foreign matter. The power reception coil 22 may be moved in the vertical direction in the same manner as the movable part 12.

The power supply device 100 includes a power control unit 11, a wireless communication unit 13, and the control unit 14.

The power control unit 11 is a circuit which converts AC power transmitted from an AC power supply 110 to AC power with a high frequency so as to transmit the converted power to the power transmission coil 41. The power control unit 11 includes a rectification unit 111, a power factor correction (PFC) circuit 112, a DC power supply 114, and an inverter 113.

The rectification unit 111 is a circuit electrically connected to the AC power supply 110 to rectify the AC power output from the AC power supply 110. The PFC circuit 112 is a circuit for correcting a power factor by rectifying a waveform output from the rectification unit 111, and is connected between the rectification unit 111 and the inverter 113.

The inverter 113 includes a PWM control circuit including a switching element such as an IGBT, and converts DC power to AC power in accordance with a switching control signal so as to supply the converted power to the power transmission coil 41. The DC power supply 114 outputs DC voltage when the power transmission coil 41 is subjected to minute excitation.

The wireless communication unit 13 communicates with a wireless communication unit 23 provided in the vehicle 10 through Wi-Fi communication.

The control unit 14 is a controller for controlling the entire power supply device 100, and includes an inverter control unit 141, a PFC control unit 142, and a sequence control unit 143. The control unit 14 executes the processing of determining a parking position when the vehicle 10 is parked in the parking space. The PFC control unit 142 generates an excitation power instruction, and at the same time, the inverter control unit 141 generates a frequency instruction and duty of the excitation power, for example, so as to control the inverter 113. The control unit 14 thus transmits the electric power for determining the parking position from the power transmission coil 41 to the power reception coil 22. The control unit 14, when executing the processing of determining the parking position, subjects the power transmission coil 41 to minute excitation or weak excitation so as to transmit the electric power for the parking position determination. The sequence control unit 143 communicates with the power reception device 200 to send/receive sequence information via the wireless communication unit 13. The minute excitation and the weak excitation both are excitation weaker than that during normal charging, and as weak as a level having no influence on the circumference. The control unit 14 and the drive control unit 18 are each a general-purpose microcomputer including a central processing unit (CPU), a memory, and an input/output unit, for example. The control unit 14 may include the inverter 113.

The power reception device 200 includes the power reception coil 22, the wireless communication unit 23, a charge control unit 24, a rectification unit 25, a relay switch 26, the battery 27, an inverter 28, a motor 29, and a notification unit 30.

The wireless communication unit 23 communicates with the wireless communication unit 13 provided in the power supply device 100.

The charge control unit 24 is a controller for controlling the charge of the battery 27. The charge control unit 24 executes the processing of determining the parking position when the vehicle 10 is parked in the parking space. The charge control unit 24 then monitors the electric power received by the power reception coil 22. The charge control unit 24 detects a position of the power reception coil 22 in accordance with the voltage received by the power reception coil 22 when the power transmission coil 41 is excited. The charge control unit 24 also controls the wireless communication unit 23, the notification unit 30, the relay switch 26, and the like, and sends a signal indicating the start of charging to the control unit 14 of the power supply device 100 via the wireless communication unit 23.

The rectification unit 25 is connected to the power reception coil 22, and rectifies the AC power received by the power reception coil 22 to DC power so as to output the electric power to the battery 27 or the inverter 28 (refer to Fig. 2).

The relay switch 26 is switched between the ON state and the OFF state through the control by the charge control unit 24. When the relay switch 26 is in the OFF state, the battery 27 and the rectification unit 25 are electrically isolated from each other (refer to Fig. 2). The battery 27 includes a plurality of secondary batteries connected together so as to serve as a power source of the vehicle 10.

The inverter 28 includes a PWM control circuit including a switching element such as an IGBT, and converts the DC power output from the battery 27 to AC power in accordance with a switching control signal to supply the converted power to the motor 29.

The motor 29 is a three-phase AC motor, for example, and serves as a drive source for driving the vehicle 10.

The notification unit 30 is a warning lamp, or a display or a speaker of a navigation device, for example, and outputs and presents light, an image, or voice to the user in accordance with the control by the charge control unit 24.

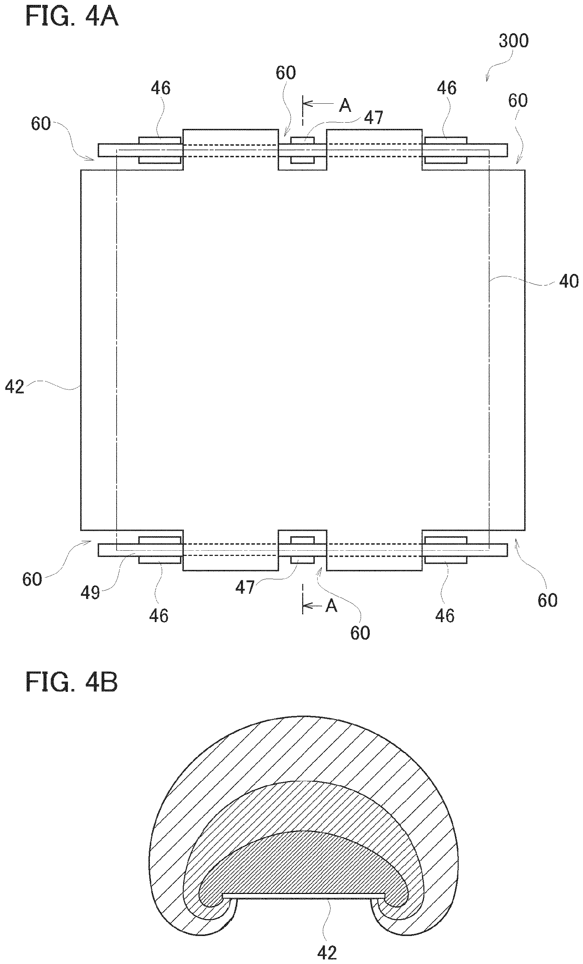

The specific configuration of the power transmission device 300, and the upward and downward movements of the movable part 12 are described below with reference to Fig. 3A, Fig. 3B, and Fig. 4A.

As illustrated in Fig. 3A and Fig. 3B, the movable part 12 is provided inside with a flat nonmagnetic plate 42. The nonmagnetic plate 42 is formed from nonmagnetic metal, such as aluminum. A ferrite core 40 is arranged over the nonmagnetic plate 42 in the vertical direction. The power transmission coil 41 is arranged on the upper side of the ferrite core 40 in the vertical direction. The nonmagnetic plate 24 has a plurality of cuts 60. The cuts 60 are described in detail below. The nonmagnetic plate 42, the ferrite core 40, and the power transmission coil 41 are covered with a cover 43.

As illustrated in Fig. 3A and Fig. 3B, the movable part 12 can be moved by the elevating mechanism 17 in the vertical direction (in the upper-lower direction). The elevating mechanism 17 is arranged under the movable part 12 in the vertical direction. The elevating mechanism 17 includes two arms 45, a rotation swing part 47 located at a position at which the arms 45 intersect with each other, slide swing parts 46 provided at the respective tips of the arms 45, a rail 49, bellows 50, the actuator 44, and the drive control unit 18.

The bellows 50 are formed from rubber, resin, or metal, for example. The bellows 50 prevent water or foreign matter from entering between the fixed part 15 and the movable part 12. The drive control unit 18 receives the signal from the control unit 14 to control the actuator 44 in accordance with the signal received. The operation of the actuator 44 drives the arms 45. The operation of the arms 45 causes the slide swing parts 46 to move along the rail 49 on each side. The actuator 44 may be an electric motor, a hydraulic actuator, or a pneumatic actuator, for example.

The movable part 12 is moved in the vertical direction in association with the movement of the elevating mechanism 17 in the vertical direction. This movement adjusts a distance (which is a gap) between the power transmission coil 41 and the power reception coil 22. The distance adjustment increases a coupling coefficient between the power transmission coil 41 and the power reception coil 22, so as to achieve efficient charging. The movable part 12 not in the charging state is located closer to the ground, as illustrated in Fig. 3A.

Either the slide swing parts 46 or the rotation swing part 47 associated with the elevating mechanism 17 may be frozen during a low-temperature season such as winter, which may impede the movement of the movable part 12. The freeze of both the slide swing parts 46 and the rotation swing part 47 is also presumed to impede the movement of the movable part 12. The case in which either the slide swing parts 46 or the rotation swing part 47 is frozen to impede the movement of the movable part 12 is also referred to below as a state in which the power transmission device 300 is frozen. While the following is illustrated with the case in which either the slide swing parts 46 or the rotation swing part 47 is frozen, it should be understood that the present invention is also applicable to the case in which both the slide swing parts 46 and the rotation swing part 47 are frozen.

According to the present embodiment, the nonmagnetic plate 42 has the cuts 60, as illustrated in Fig. 4A, in order to defrost the slide swing parts 46 or the rotation swing parts 47 on the respective sides. The cuts 60 are penetration parts penetrating the nonmagnetic plate 42 in the vertical direction. The cuts 60 are provided at the outer circumference of the nonmagnetic plate 42. The cuts 60 are located to correspond to the positions of the slide swing parts 46 and the rotation swing parts 47. The cuts 60 are thus located immediately over the slide swing parts 46 and the rotation swing parts 47 to overlap in the vertical direction. While Fig. 4A illustrates the plural (six) cuts 60, the nonmagnetic plate 42 may have a single cut 60. The cuts 60 may be located only immediately over the slide swing parts 46 or may be located only immediately over the rotation swing parts 47.

When the freeze of the slide swing parts 46 or the rotation swing parts 47 is detected or predicted, the inverter 113 excites the power transmission coil 41. The case in which the freeze of the slide swing parts 46 or the rotation swing parts 47 is detected or predicted refers to a state in which the temperature measured by the temperature sensor 19 is lower than a predetermined temperature (a threshold), for example. The predetermined temperature as used herein is a temperature for determining the freeze, and is preliminarily set through experiments or simulations. The control unit 14 compares the temperature measured by the temperature sensor 19 with the predetermined temperature, and determines whether the slide swing parts 46 or the rotation swing parts 47 are frozen. The control unit 14 thus serves as a determination unit. The temperature sensor 19 may be provided at both the slide swing parts 46 and the rotation swing parts 47.

The control unit 14, when determining that the slide swing parts 46 or the rotation swing parts 47 are frozen, sends a signal to the inverter 113. The inverter 113 excites the power transmission coil 41 in accordance with the signal. This excitation is stronger than the weak excitation used for detecting the position of the power reception coil 22. The reason for the use of the strong excitation is to heat the slide swing parts 46 or the rotation swing parts 47.

The excitation of the power transmission coil 41 by the inverter 113 generates a magnetic field in the power transmission coil 41. Since the cuts 60 in the present embodiment are located to correspond to the positions of the slide swing parts 46 and the rotation swing parts 47, lines of magnetic force (magnetic flux) generated in the power transmission coil 41 pass through the cuts 60 to reach the slide swing parts 46 or the rotation swing parts 47. The slide swing parts 46 or the rotation swing parts 47 are thus heated, defrosting the slide swing parts 46 or the rotation swing parts 47 accordingly. This enables the constant upward and downward movements of the movable part 12 even during a low-temperature season such as winter.

According to the present embodiment, magnetic members 48a are provided on the upper side of the slide swing parts 46, as illustrated in Fig. 3B. In addition, a magnetic member 48b is provided along the circumference of each rotation swing part 47, as illustrated in Fig. 3B. The material used for the respective magnetic members 48a and 48b is, for example, but not necessarily, an iron. The use of the magnetic members 48a (48b) having high magnetic permeability and electrical resistance such as iron facilitates the concentration of the magnetic flux generated in the power transmission coil 41 so as to enhance Joule heating due to an eddy current. This can efficiently heat the slide swing parts 46 or the rotation swing parts 47, so as to defrost the slide swing parts 46 or the rotation swing parts 47 accordingly. The positions at which the magnetic members 48a are located are not limited to the upper side of the slide swing parts 46. The magnetic members 48a may be provided along the circumference of the slide swing parts 46.

As illustrated in Fig. 4A, the cuts 60 may be located partly on the inner side of the outer circumference of the ferrite core 40 as viewed from the top side of the ferrite core 40. This arrangement allows a large amount of the magnetic flux to leak toward the rear side (toward the lower side in the vertical direction) of the nonmagnetic plate 42, so as to efficiently heat the slide swing parts 46 or the rotation swing parts 47.

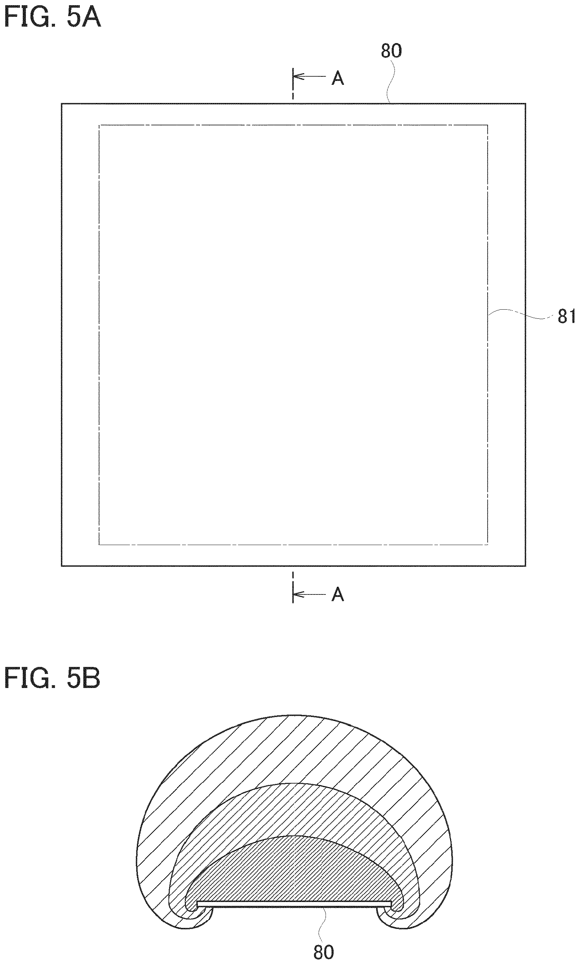

The leakage of the magnetic flux depending on the presence or absence of the cuts 60 is described below with reference to Fig. 4B, Fig. 5A, and Fig. 5B.

As illustrated in Fig. 5A and Fig. 5B, a nonmagnetic plate 80 of a comparative example has no cuts 60. A ferrite core 81 is arranged over the nonmagnetic plate 80 of the comparative example. As illustrated in Fig. 4B and Fig. 5B, a larger amount of magnetic flux leaks toward the rear side of the nonmagnetic plate 42 in the case provided with the cuts 60 than the case without cuts 60.

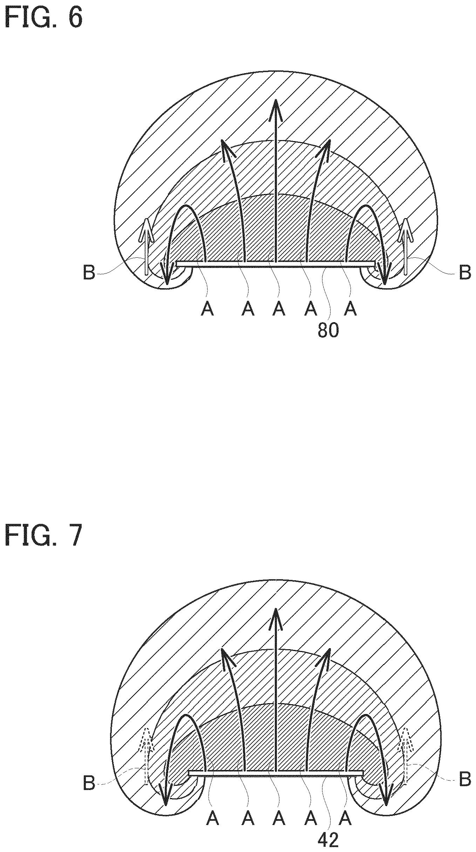

A mechanism of leakage of the magnetic flux depending on the presence or absence of the cuts 60 is described below with reference to Fig. 6 and Fig. 7.

An eddy current is generated at the outer circumference of the nonmagnetic plate 80 (refer to Fig. 5A). As illustrated in Fig. 6, the magnetic flux (indicated by the arrows B) is caused in the direction offsetting the magnetic flux (indicated by the arrows A) generated from the power transmission coil 41 at the outer circumference of the nonmagnetic plate 80. The case of the nonmagnetic plate 42 having the cuts 60 (refer to Fig. 4A) decreases the generation of the eddy current due to the cuts 60. The magnetic flux (indicated by the arrows B) caused in the direction offsetting the magnetic flux (indicated by the arrows A) generated from the power transmission coil 41 is also decreased, as illustrated in Fig. 7. This allows a larger amount of the magnetic flux to leak toward the rear side of the nonmagnetic plate 42, so as to efficiently heat the slide swing parts 46 or the rotation swing parts 47.

### (Modified Examples)

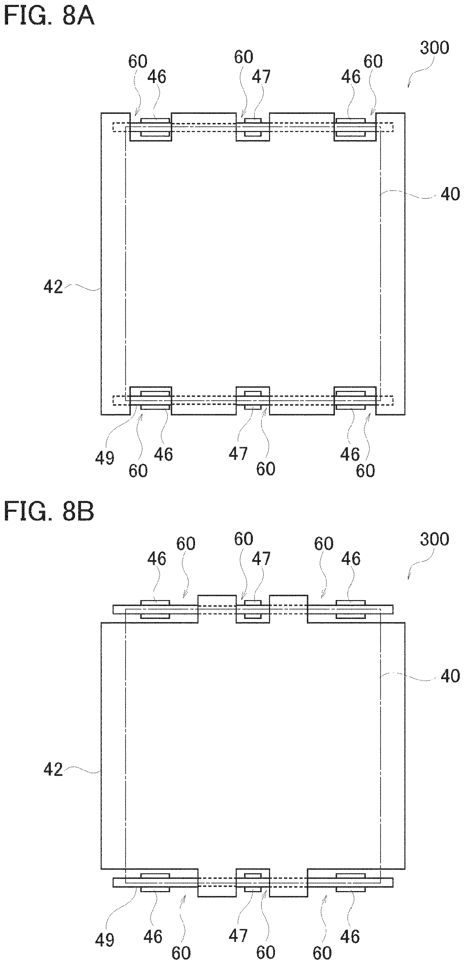

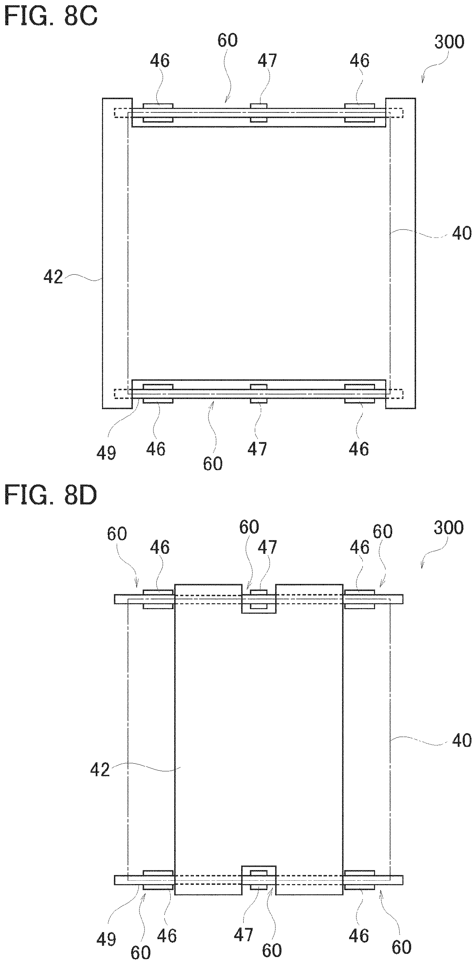

The cuts 60 may be provided at any positions that correspond to the positions of the slide swing parts 46 and the rotation swing parts 47. For example, as illustrated in Fig. 8A, the cuts 60 may be provided into a square wave-like shape. As illustrated in Fig. 8B, the cuts 60 may be provided to have a wider area at each end portion. As illustrated in Fig. 8C and Fig. 8D, the cuts 60 may be provided to be elongated in the horizontal direction.

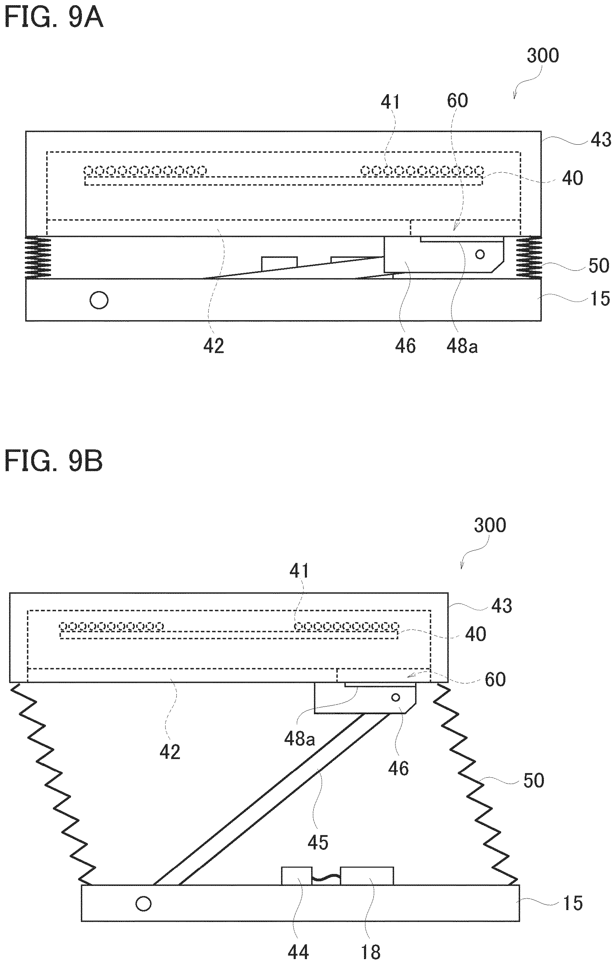

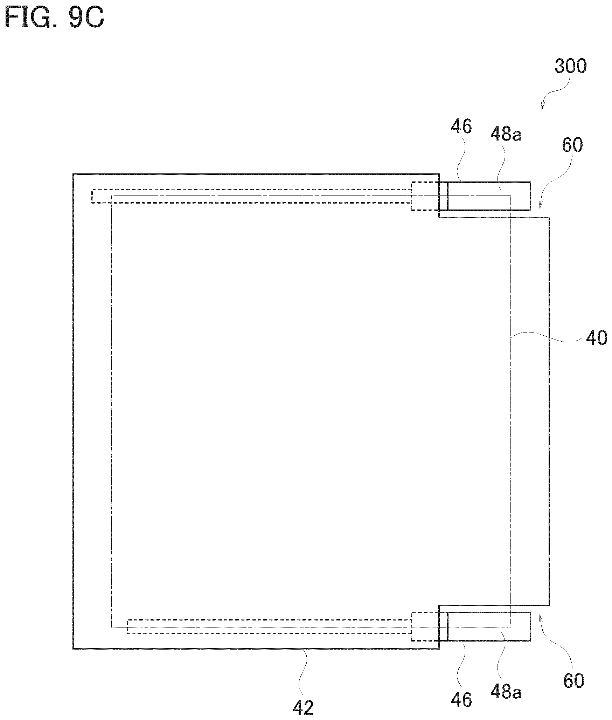

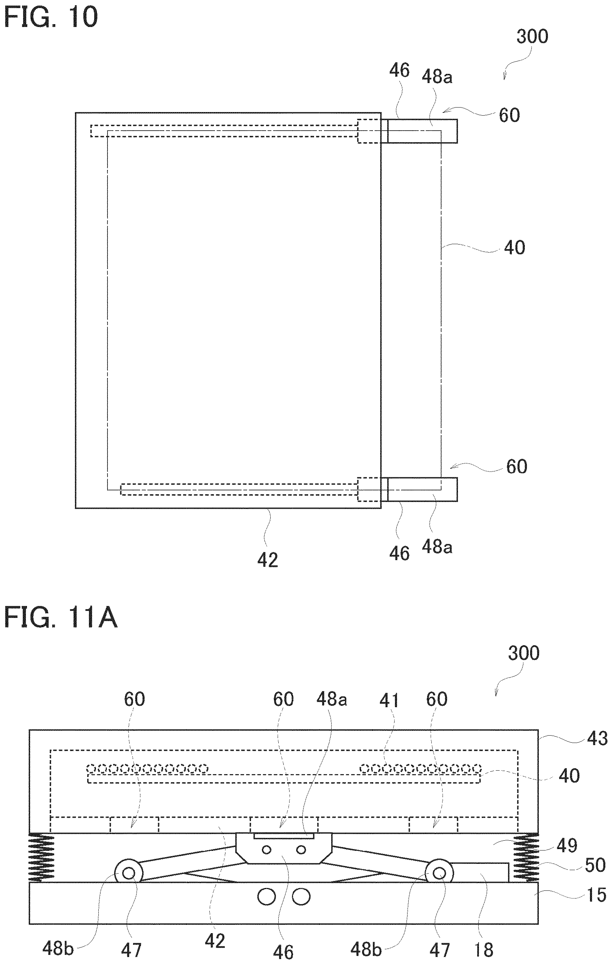

The elevating mechanism 17 is illustrated above with the case in which the arms 45 intersect with each other as illustrated in Fig. 3B, but is not limited to this case. For example, the elevating mechanism 17 may have a single arm 45 on each side, as illustrated in Fig. 9A and Fig. 9B. The cuts 60 are located immediately over the slide swing parts 46 to overlap in the vertical direction, as illustrated in Fig. 9C. The cuts 60 may be located partly on the inner side of the outer circumference of the ferrite core 40 as viewed from the top side of the ferrite core 40. The cut 60 may be provided to be elongated in the horizontal direction, as illustrated in Fig. 10.

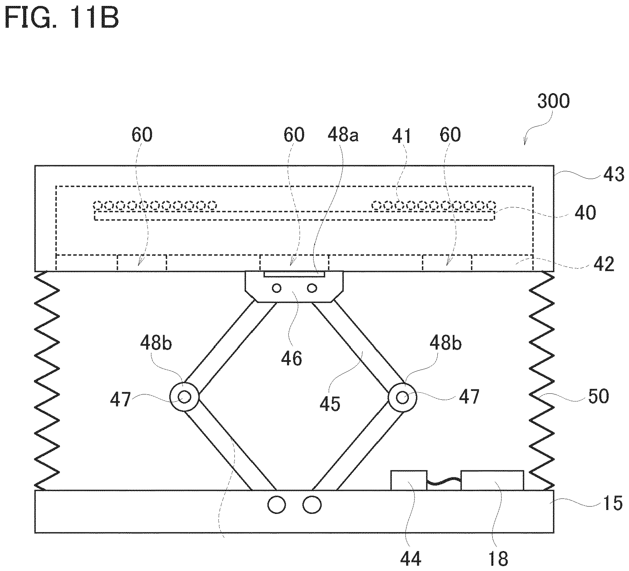

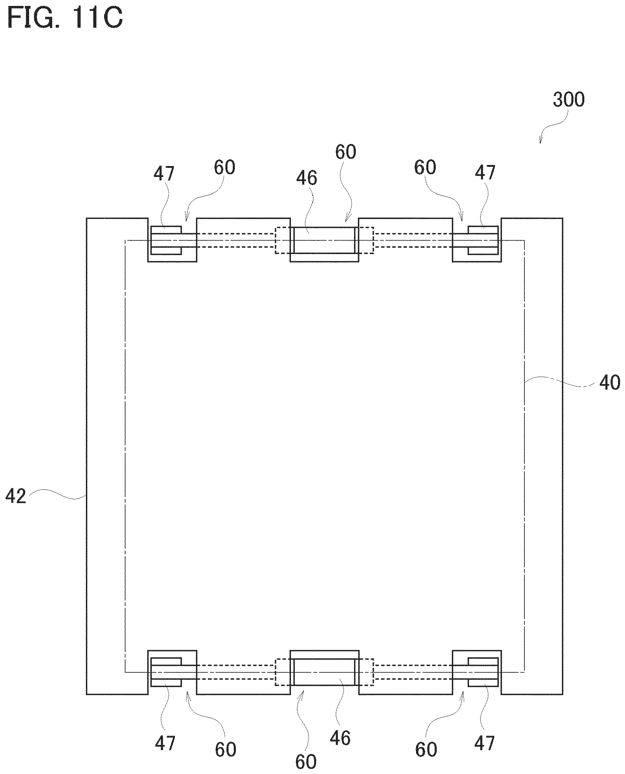

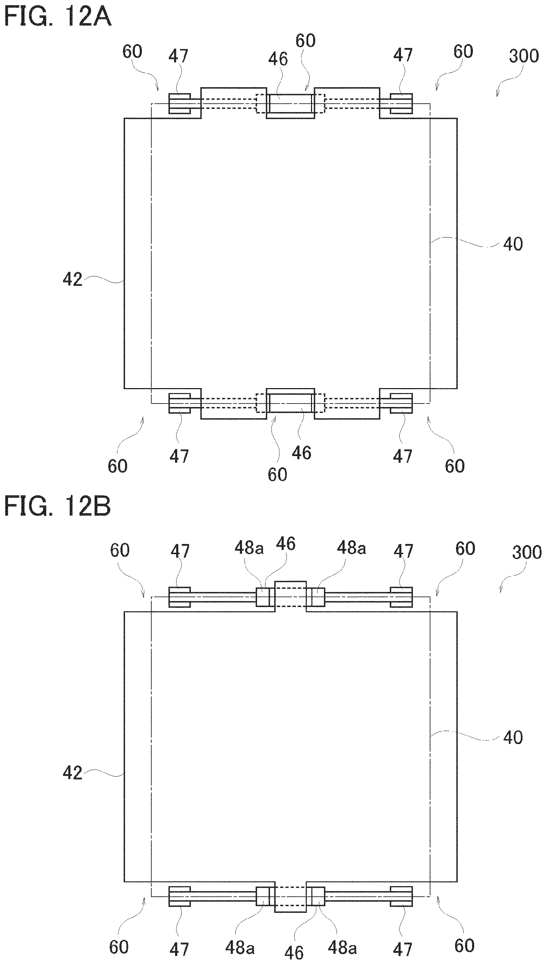

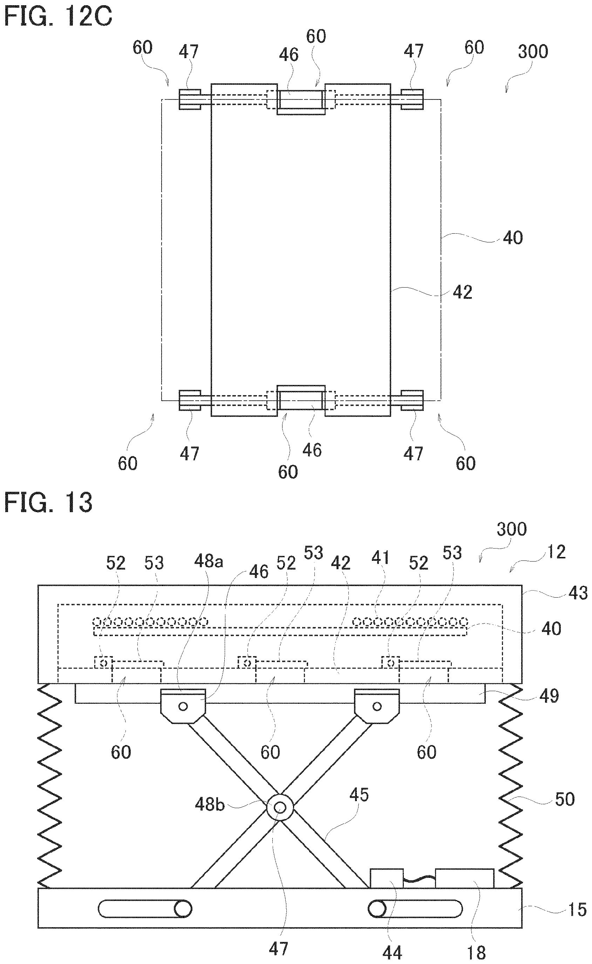

Alternatively, the elevating mechanism 17 may be a pantograph type, as illustrated in Fig. 11A and Fig. 11B. The cuts 60 are located immediately over the slide swing parts 46 and the rotation swing parts 47 to overlap in the vertical direction, as illustrated in Fig. 11C. The cuts 60 may be located partly on the inner side of the outer circumference of the ferrite core 40 as viewed from the top side of the ferrite core 40. As illustrated in Fig. 12A, the cuts 60 may be provided to have a wider area at each end portion. As illustrated in Fig. 12B and Fig. 12C, the cuts 60 may be provided to be elongated in the horizontal direction.

As illustrated in Fig. 13, the movable part 12 may further include actuators 52 and lids 53. When the movable part 12 is moved up, namely, when the operation of charging starts, the drive control unit 18 controls the actuators 52 to operate the lids 53. In particular, the lids 53 are operated to cover the cuts 60 from above in the vertical direction. Covering the cuts 60 by the lids 53 during charging prevents a leakage of the magnetic flux through the cuts 60. This increases the coupling coefficient between the power reception coil 22 and the power transmission coil 41, so as to reduce noise during charging.

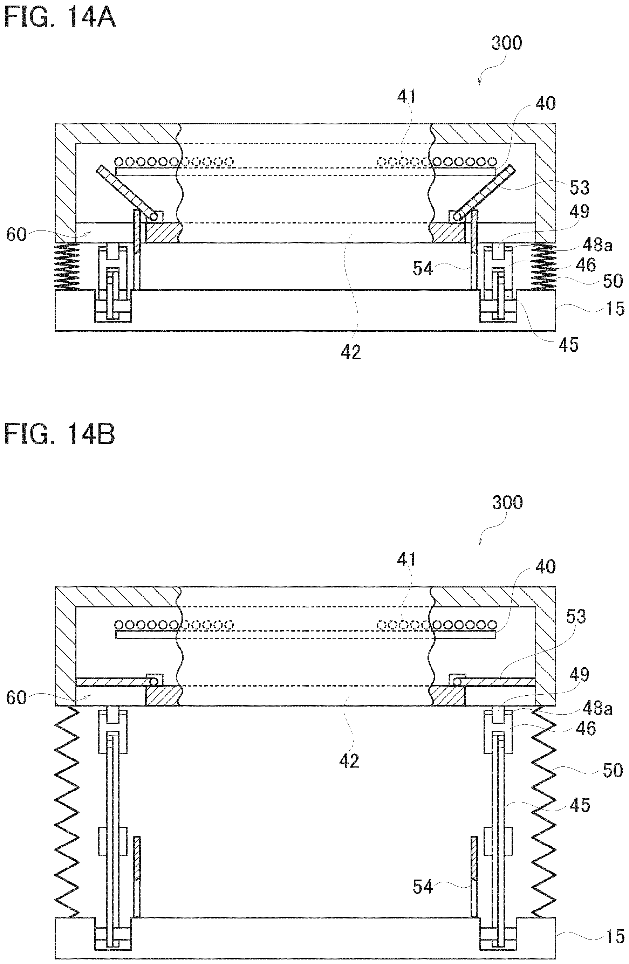

A means of operating the lids 53 is not limited to the actuators 52. As illustrated in Fig. 14A and Fig. 14B, projections 54 provided on the fixed part 15 may operate the lids 53. When the operation of charging is not performed, as illustrated in Fig. 14A, the lids 53 do not cover the cuts 60 due to the projections 54. During charging, the movable part 12 is moved up so that the lids 53 automatically cover the cuts 60. This increases the coupling coefficient between the power reception coil 22 and the power transmission coil 41, so as to reduce noise during charging. Further, costs can be reduced since no actuators 52 are needed.

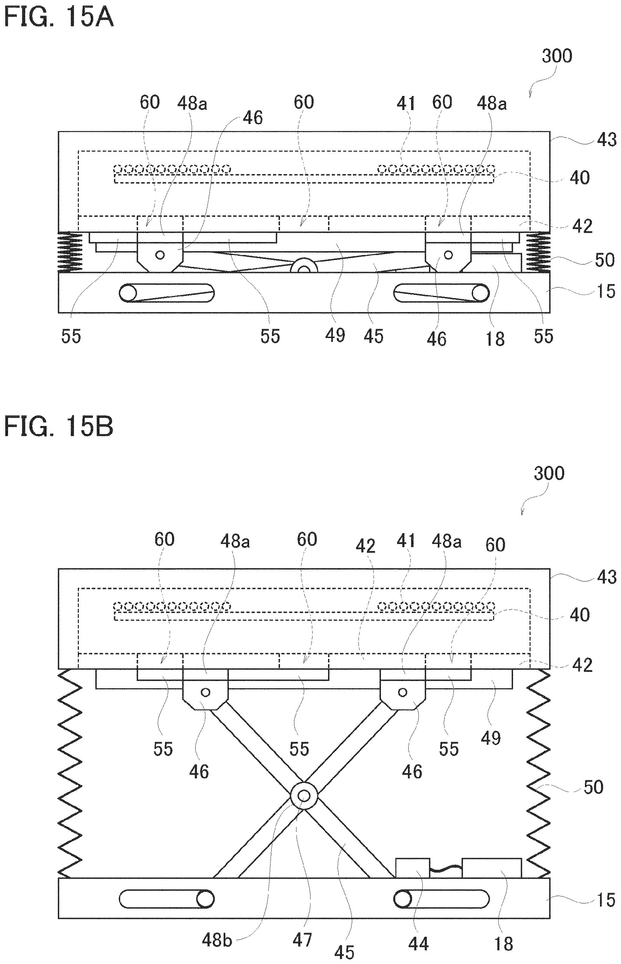

Alternatively, as illustrated in Fig. 15A and Fig. 15B, lids 55 provided in the slide swing parts 46 in the horizontal direction may cover the cuts 60 from below in the vertical direction. The lids 55 are operated synchronously with the operation of the slide swing parts 46. The lids 55 automatically cover the cuts 60 when the movable part 12 is moved up, namely, during charging, as illustrated in Fig. 15B. This increases the coupling coefficient between the power reception coil 22 and the power transmission coil 41, so as to reduce noise during charging. Further, costs can be reduced since no actuators 52 are needed.

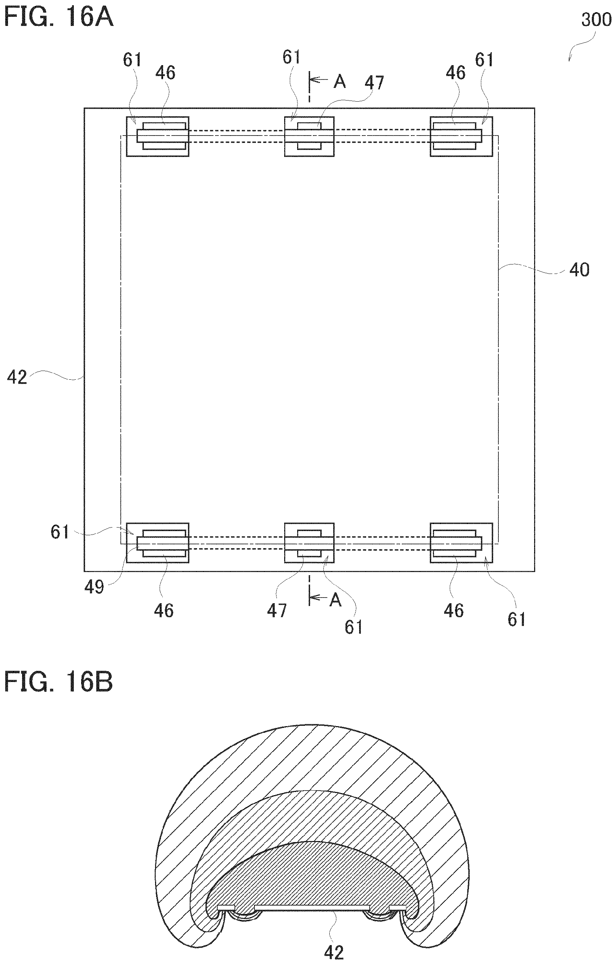

While the embodiment is illustrated above with the cuts 60 as penetration parts penetrating the nonmagnetic plate 42 in the vertical direction, the penetration parts are not limited to the cuts 60. As illustrated in Fig. 16A, the nonmagnetic plate 42 may have penetration holes 61 penetrating in the vertical direction. The penetration holes 61 are located immediately over the slide swing parts 46 and the rotation swing parts 47 to overlap in the vertical direction, as illustrated in Fig. 16A. The penetration holes 61 may be located partly on the inner side of the outer circumference of the ferrite core 40 as viewed from the top side of the ferrite core 40. As illustrated in Fig. 16B, a larger amount of magnetic flux leaks toward the rear side of the nonmagnetic plate 42 in the case provided with the penetration holes 61 than the case without penetration holes 61 (refer to Fig. 5). The larger amount of the magnetic flux leaking toward the rear side of the nonmagnetic plate 42 can efficiently heat the slide swing parts 46 or the rotation swing parts 47.

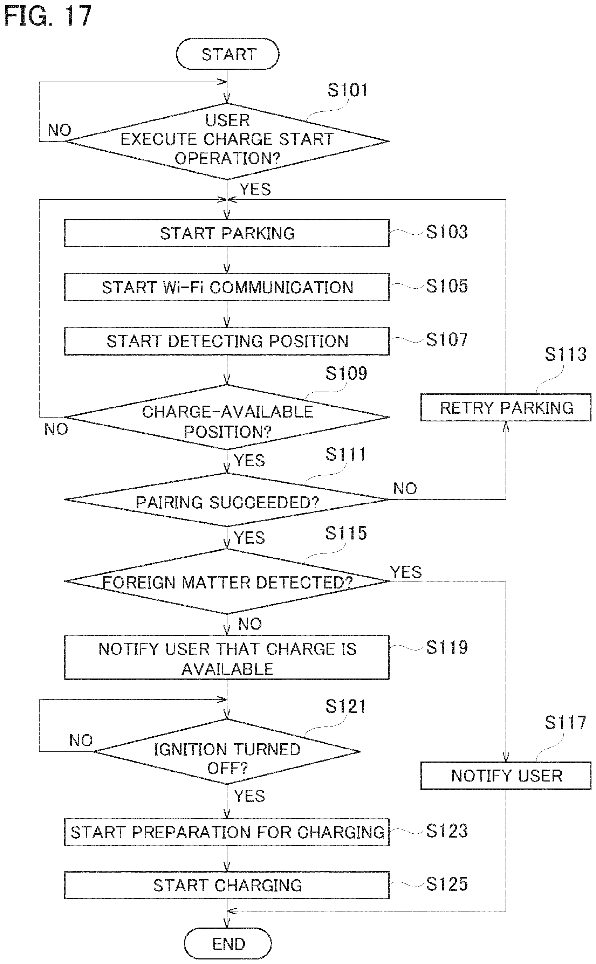

Next, an example of operation of the wireless power supply system is described below with reference to the flowchart shown in Fig. 17.

In step S101, the charge control unit 24 determines whether the user executes a charge start operation. The charge start operation as used herein refers to an operation in which the user operates a charge start switch provided in the compartment of the vehicle 10, for example. When the user executes the charge start operation (Yes in step S101), the process proceeds to step S103, and the user starts parking. When the user does not execute the charge start operation yet (No in step S101), the process is on standby.

The process proceeds to step S105, and the charge control unit 24 starts the Wi-Fi communication with the control unit 14 via the wireless communication unit 23. The charge control unit 24 sends a weak excitation requirement signal to the control unit 14 when the vehicle 10 is coming close to the parking space. The communication means is not limited to the Wi-Fi communication, and may be any means.

The process proceeds to step S107, and the control unit 14 detects the position of the power reception coil 22. The control unit 14 supplies the electric power of the weak excitation to the power transmission coil 41 so as to subject the power transmission coil 41 to weak excitation in accordance with the weak excitation requirement signal received in step S105. The charge control unit 24 detects the electric power received by the power reception coil 22, and determines that the power reception coil 22 is present within the charge available region when the received electric power is a predetermined threshold or greater.

When the power reception coil 22 is present within the charge available region (Yes in step S109), the process proceeds to step S111, and the control unit 14 executes pairing between the power transmission coil 41 and the power reception coil 22. The term "pairing" as used herein refers to a confirmation of the combination between the power reception coil 22 and the power transmission coil 41 which supplies the electric power via a wireless connection to the power reception coil 22. When the power reception coil 22 is not present within the charge available region (No in step S109), the process returns to step S103. When the control unit 14 succeeds in the pairing between the power transmission coil 41 and the power reception coil 22 (Yes in step S111), the process proceeds to step S115, and the control unit 14 detects the presence or absence of foreign matter on the top surface of the cover covering the power transmission coil 41 by use of a coil for detecting foreign matter. When the pairing is not available (No in step S111), the process proceeds to step S113, and the user retries parking.

When any foreign matter is present on the top surface of the cover covering the power transmission coil 41 (Yes in step S115), the process proceeds to step S117, and the notification unit 30 notifies the user of the presence of the foreign matter on the power transmission coil 41 to end the series of the process. The notification unit 30 may instruct the user to remove the foreign matter in step S117. When the user removes the foreign matter, the process may proceed to step S119.

When no foreign matter is detected on the top surface of the cover covering the power transmission coil 41 (No in step S115), the process proceeds to step 119, and the notification unit 30 notifies the user that the charge is available. When the user turns off the ignition (Yes in step S121), the process proceeds to step S123, and the control unit 14 starts making ready for charging. The specific explanations for the preparation for charging is described below. When the user does not turn off the ignition yet (No in step S121), the process is on standby. The phrase "turning off the ignition" as used in the present embodiment encompasses the operation of stopping the vehicle 10 and the operation of stopping the power supply system of the vehicle 10. The ignition may be turned off such that an ignition switch provided in the compartment of the vehicle 10 is turned off, or such that a power supply system switch provided in the compartment of the vehicle is turned off. The process then proceeds to step S125, and the control unit 14 starts charging.

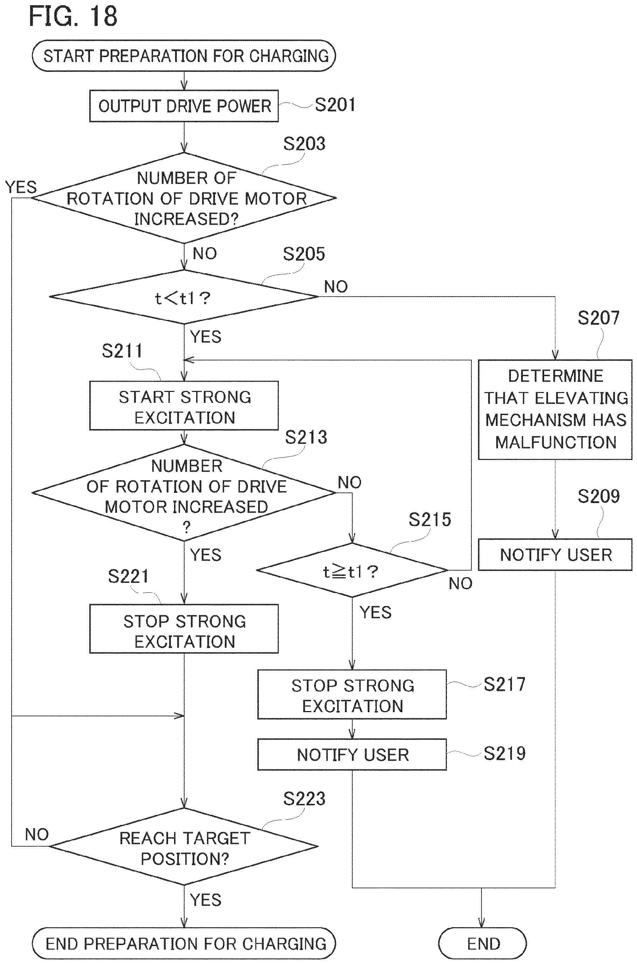

Next, the preparation for charging is described below with reference to the flowchart shown in Fig. 18.

In step S201, the drive control unit 18, when receiving the signal from the control unit 14, operates the actuator 44. The process proceeds to step S203, and the control unit 14 determines whether the number of rotation of a drive motor provided in the actuator 44 has increased. The elevating mechanism 17 is operating in a normal state when the number of rotation of the drive motor has increased (Yes in step S203), and the process then proceeds to step S223.

When the number of rotation of the drive motor provided in the actuator 44 does not increase (No in step S203), the elevating mechanism 17 is presumed not to be operated in the normal state, and the process proceeds to step S205. In step S205, the control unit 14 compares the temperature t of the slide swing parts 46 or the rotation swing parts 47 with a freeze threshold temperature t1. The freeze threshold temperature t1 is a temperature used for determining the freeze. When the temperature t is lower than the freeze threshold temperature t1 (Yes in step S205), either the slide swing parts 46 or the rotation swing parts 47 are frozen or presumed to be frozen, and the process proceeds to step S211. When the temperature t is higher than or equal to the freeze threshold temperature t1 (No in step S205), the freeze is not expected. The control unit 14 then determines that the elevating mechanism 17 has a malfunction in step S207, and notifies the user of the occurrence of the malfunction (in step S209). The series of the process thus ends.

In step S211, the inverter 113 applies strong excitation to the power transmission coil 41. The strong excitation is stronger than the weak excitation used for detecting the position of the power receiving coil 22. The reason that the inverter 113 applies the strong excitation to the power transmission coil 41 is to heat the slide swing parts 46 or the rotation swing parts 47.

The process proceeds to step S213, and the control unit 14 again determines whether the number of rotation of the drive motor provided in the actuator 44 has increased. The slide swing parts 46 or the rotation swing parts 47 are defrosted when the number of rotation of the drive motor has increased (Yes in step S213), and the inverter 113 stops applying the strong excitation (in step S221). When the number of rotation of the drive motor does not increase (No in step S213), the process proceeds to step S215, and the control unit 14 again compares the temperature t with the freeze threshold temperature t1. When the temperature t is higher than or equal to the freeze threshold temperature t1 (No in step S215), the freeze is not expected, while the number of rotation of the drive motor has not increased yet. The inverter 113 then stops applying the strong excitation (in step S217). The control unit 14 determines that the elevating mechanism 17 has a malfunction, and notifies the user of the occurrence of the malfunction (in step S219). The series of the process thus ends. When the temperature t is lower than the freeze threshold temperature t1 (No in step S215), the process returns to step S211. In step S223, when the movable part 12 reaches a target position (Yes in step S223), the control unit 14 stops the drive motor.

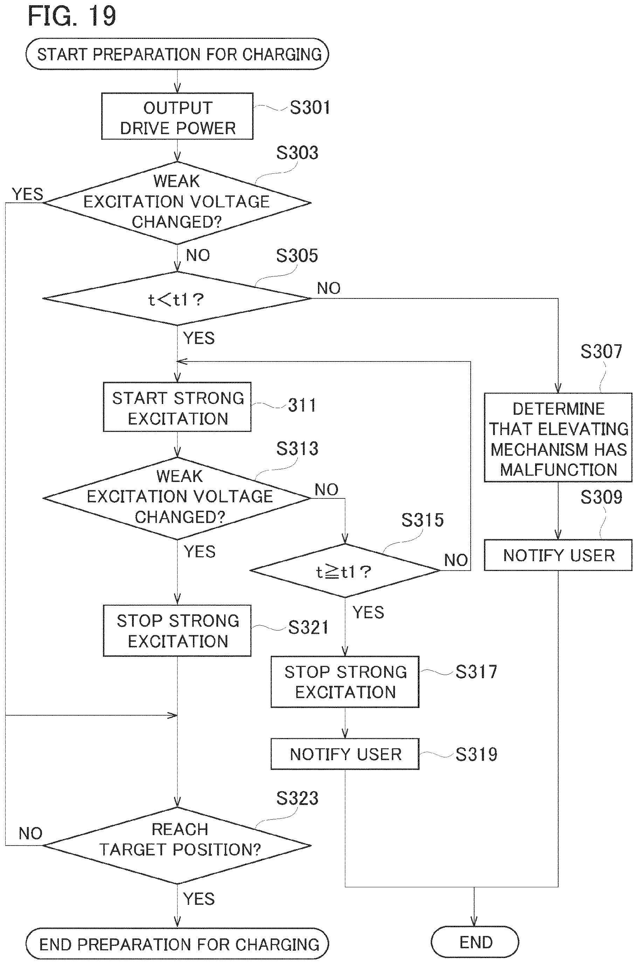

The control unit 14 uses the number of rotation of the drive motor in the case illustrated in the flowchart shown in Fig. 18, but is not limited to this case. The control unit 14 may use a weak excitation voltage of the power reception coil 22 so as to start making ready for charging. This case is described below with reference to the flowchart shown in Fig. 19. The processing in steps S301, S305 to S311, and S315 to S323 shown in Fig. 19 is the same as that in steps S201, S205 to S211, and S215 to S223 shown in Fig. 18, and overlapping explanations are not repeated below.

In step S303 shown in Fig. 19, the control unit 14 determines whether the weak excitation voltage of the power reception coil 22 has changed. The power transmission coil 41 has been subjected to the weak excitation by the inverter 113 during the preparation for charging. The distance between the power transmission coil 41 and the power reception coil 22 decreases when the movable part 12 is moved up, and the weak excitation voltage of the power reception coil changes. When the weak excitation voltage of the power reception coil 22 does not change (No in step S303), the elevating mechanism 17 is presumed not to be operated in the normal state, and the process proceeds to step S305.

In step S313 shown in Fig. 19, the control unit 14 again determines whether the weak excitation voltage of the power reception coil 22 has changed. The slide swing parts 46 or the rotation swing parts 47 are defrosted when the weak excitation voltage of the power reception coil 22 has changed (Yes in step S313), and the inverter 113 stops applying the strong excitation voltage (in step S321). When the weak excitation voltage of the power reception coil 22 does not change (No in step S313), the process proceeds to step S315.

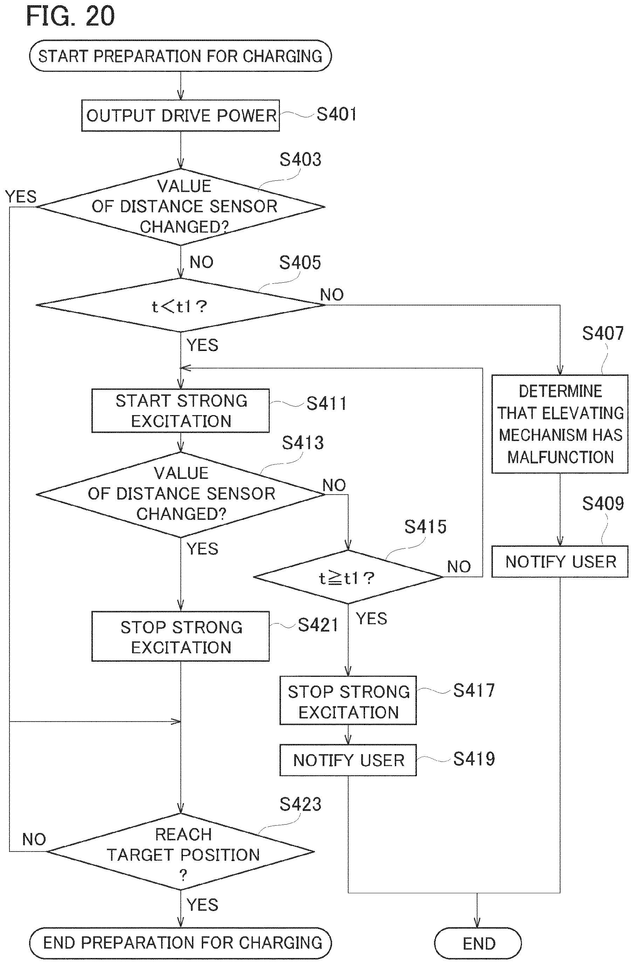

The control unit 14 may use a value of the distance sensor 20 to start making ready for charging. This case is described below with reference to the flowchart shown in Fig. 20. The processing in steps S401, S405 to S411, and S415 to 423 shown in Fig. 20 is the same as that in steps S201, S205 to S211, and S215 to S223 shown in Fig. 18, and overlapping explanations are not repeated below.

In step S403 shown in Fig. 20, the control unit 14 determines whether the value of the distance sensor 20 has changed. The distance between the power transmission coil 41 and the power reception coil 22 decreases when the movable part 12 is moved up, and the value of the distance sensor 20 changes. When the value of the distance sensor 20 does not change (No in step S403), the elevating mechanism 17 is presumed not to be operated in the normal state, and the process proceeds to step S405.

In step S413 shown in Fig. 20, the control unit 14 again determines whether the value of the distance sensor 20 has changed. The slide swing parts 46 or the rotation swing parts 47 are defrosted when the value of the distance sensor 20 has changed (Yes in step S413), and the inverter 113 stops applying the strong excitation voltage (in step S421). When the value of the distance sensor 20 does not change (No in step S413), the process proceeds to step S415.

As described above, the wireless power supply system according to the present embodiment can achieve the following operational effects.

The inverter 113 excites the power transmission coil 41 when the freeze of the slide swing parts 46 or the rotation swing parts 47 (the freeze of the power transmission device 300) is detected or predicted. The excitation generates a magnetic field in the power transmission coil 41. Since the cuts 60 in the present embodiment are located to correspond to the positions of the slide swing parts 46 and the rotation swing parts 47, the lines of magnetic force (magnetic flux) generated in the power transmission coil 41 pass through the cuts 60 to reach the slide swing parts 46 or the rotation swing parts 47. The slide swing parts 46 or the rotation swing parts 47 are thus heated, defrosting the slide swing parts 46 or the rotation swing parts 47 accordingly. This enables the movable part 12 to be constantly moved up and down with respect to the ground even during a low-temperature season such as winter. The penetration holes 61 (refer to Fig. 16A) may be provided instead of the cuts 60.

The cuts 60 may be located partly on the inner side of the outer circumference of the ferrite core 40 as viewed from the top side of the ferrite core 40. This arrangement leads a large amount of the magnetic flux to leak toward the rear side (the lower side in the vertical direction) of the nonmagnetic plate 42, so as to efficiently heat the slide swing parts 46 or the rotation swing parts 47.

The cuts 60 are located to correspond to the positions of the slide swing parts 46 and the rotation swing parts 47. Namely, the cuts 60 are located immediately over the slide swing parts 46 and the rotation swing parts 47 to overlap in the vertical direction. The magnetic flux generated in the power transmission coil 41 thus passes through the slide swing parts 46 and the rotation swing parts 47. This promotes the effect of heating the slide swing parts 46 and the rotation swing parts 47.

The magnetic members 48a are provided in contact with the slide swing parts 46. In addition, the magnetic members 48b are provided in contact with the rotation swing parts 47. The magnetic members 48a and the magnetic members 48b having high magnetic permeability and electrical resistance efficiently collect the magnetic flux. This promotes the Joule heating due to the eddy current generated in the magnetic members 48a and the magnetic members 48b, so as to enhance the heating of the slide swing parts 46 and the rotation swing parts 47.

The power transmission device 300 may include the lids 53. The lids 53 cover the cuts 60 in the vertical direction when the movable part 12 is moved up. The lids 53 prevent the leakage of the magnetic flux through the cuts 60. This increases the coupling coefficient between the power reception coil 22 and the power transmission coil 41, so as to reduce noise during charging.

Alternatively, the lids 55 provided in the slide swing parts 46 in the horizontal direction may cover the cuts 60. The lids 55 is operated synchronously with the upward movement of the movable part 12 so as to cover the cuts 60 in the vertical direction. The lids 55 prevent the leakage of the magnetic flux through the cuts 60. This increases the coupling coefficient between the power reception coil 22 and the power transmission coil 41, so as to reduce noise during charging.

The respective functions described in the above embodiment can be implemented in single or plural processing circuits. The respective processing circuits include a programmed processing device, such as a processing device including an electric circuit. The respective processing circuits also include a device including an application-specific integrated circuit (ASIC) configured to execute the functions described above, and circuit components.

While the present invention has been described above by reference to the embodiment, it should be understood that the present invention is not intended to be limited to the descriptions and the drawings composing part of this disclosure. Various alternative embodiments, examples, and technical applications will be apparent to those skilled in the art according to this disclosure.

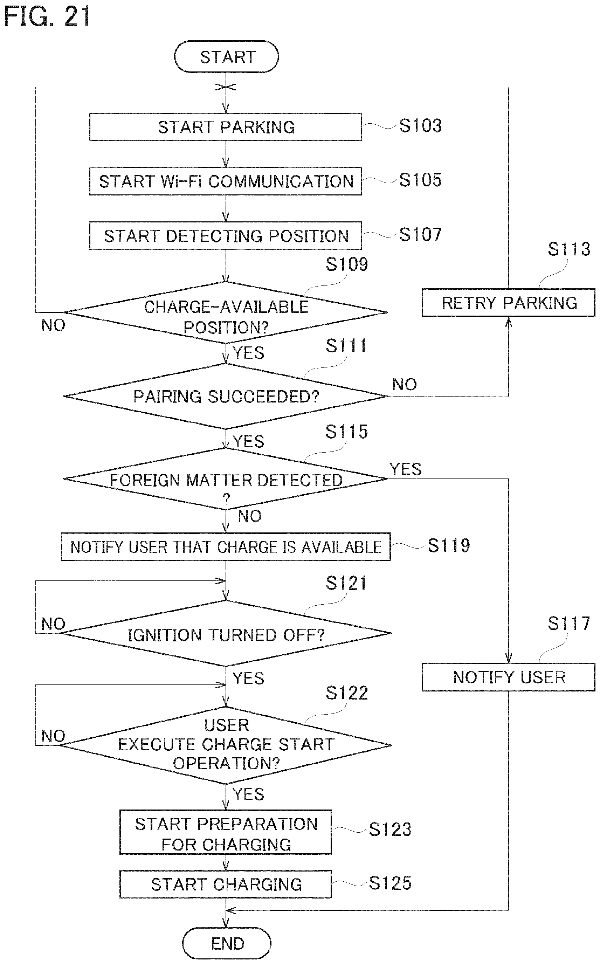

For example, while the flowchart shown in Fig. 17 is illustrated with the case in which the series of control processing starts when the user executes the charge start operation, the embodiment is not limited to this case. As illustrated in Fig. 21, the determination of whether the user executes the charge start operation may be made after the ignition is turned off. While the user sometimes parks in order to charge the vehicle, the user may start charging the vehicle when recognizing that the vehicle needs to be charged after being parked, although the user has no intention of charging the vehicle before parking. The processing shown in Fig. 17 or Fig. 21 can contribute to the user's convenience in various kinds of situations.

### REFERENCE SIGNS LIST

- 12: MOVABLE PART
- 14: CONTROL UNIT
- 15: FIXED PART
- 17: ELEVATING MECHANISM
- 18: DRIVE CONTROL UNIT
- 19: TEMPERATURE SENSOR
- 20: DISTANCE SENSOR
- 22: POWER RECEPTION COIL
- 40: FERRITE CORE
- 41: POWER TRANSMISSION COIL
- 42: NONMAGNETIC PLATE
- 43: COVER
- 44, 52: ACTUATOR
- 45: ARM
- 46: SLIDE SWING PART
- 47: ROTATION SWING PART
- 48a, 48b: MAGNETIC MEMBER
- 49: RAIL
- 50: BELLOWS
- 53, 55: LID
- 54: PROJECTION
- 60: CUT
- 61: PENETRATION HOLE
- 100: POWER SUPPLY DEVICE
- 113: INVERTER
- 200: POWER RECEPTION DEVICE
- 300: POWER TRANSMISSION DEVICE

## Claims

1. A defrosting method for a power transmission device (300) provided on a ground side, wherein:
- the power transmission device (300) includes:
- a movable part (12) configured to come up and down with respect to the ground; and
- an elevating mechanism (17) arranged on a lower side of the movable part (12) in a vertical direction and configured to move the movable part (12) up and down,
- the movable part (12) includes a power transmission coil (41) for supplying electric power via a wireless connection to a power reception coil (22) mounted on a vehicle, and a flat nonmagnetic plate (42) provided on a lower side of the power transmission coil (41) in the vertical direction, and
- the nonmagnetic plate (42) has a penetration part (60) penetrating in the vertical direction,
- the method comprises:
- measuring a temperature of the power transmission device (300);
- comparing the measured temperature with a threshold preliminarily set for determining a freeze of the power transmission device (300) so as to determine whether the power transmission device (300) is frozen; and
- exciting the power transmission coil (41) when determining that the power transmission device (300) is frozen, and
- wherein the nonmagnetic plate (42) has a penetration part (60) allowing magnetic flux from the power transmission coil (41) to leak in the vertical direction to the rear side of the nonmagnetic plate (42) to heat the elevating mechanism (17).

2. A power transmission device (300) provided on a ground side, wherein:
- the device (300) comprises:
- a movable part (12) configured to come up and down with respect to the ground;
- an elevating mechanism (17) arranged on a lower side of the movable part (12) in a vertical direction and configured to move the movable part (12) up and down; and
- a sensor configured to measure a temperature of the power transmission device (300),
- the movable part (12) includes a power transmission coil (41) for supplying electric power via a wireless connection to a power reception coil (22) mounted on a vehicle, and a flat nonmagnetic plate (42) provided on a lower side of the power transmission coil (41) in the vertical direction,
- the nonmagnetic plate (42) has a penetration part (60) penetrating in the vertical direction, and
- the power transmission coil (41) is excited when the power transmission device (300) is determined to be frozen in accordance with the temperature measured by the sensor,
- the nonmagnetic plate (42) has a penetration part (60) allowing magnetic flux from the power transmission coil (41) to leak in the vertical direction to the rear side of the nonmagnetic plate (42) to heat the elevating mechanism (17).

3. The power transmission device (300) according to claim 2,
- further comprising a ferrite core arranged between the power transmission coil (41) and the nonmagnetic plate (42),
- wherein the penetration part (60) is partly located on an inner side of an outer circumference of the ferrite core as viewed from a top side of the ferrite core.

4. The power transmission device (300) according to claim 2 or 3, wherein:
- the elevating mechanism (17) includes a swing part (46, 47) configured to move the movable part (12) up and down; and
- the penetration part (60) is located to correspond to a position of the swing part (46, 47).

5. The power transmission device (300) according to claim 4, further comprising a magnetic member (48a, 48b) provided in contact with the swing part (46, 47).

6. The power transmission device (300) according to claim 4 or 5, further comprising a lid (53) configured to cover the penetration part (60) in the vertical direction when the movable part (12) is moved upwardly.

7. The power transmission device (300) according to claim 6, wherein the lid (53) is provided in the swing part (46, 47), and is configured to be operated synchronously with an upward movement of the movable part (12) so as to cover the penetration part (60) in the vertical direction.

## Patentansprüche

1. Auftauverfahren für eine Stromübertragungsvorrichtung (300), die auf einer Bodenseite vorgesehen ist, wobei:
- die Stromübertragungsvorrichtung (300) umfasst:
- einen beweglichen Abschnitt (12), der zum Aufwärts- und Abwärtsbewegen in Bezug auf den Boden konfiguriert ist; und
- einen Hubmechanismus (17), der an einer Unterseite des beweglichen Abschnitts (12) in vertikaler Richtung angeordnet ist und zum Aufwärts- und Abwärtsbewegen des beweglichen Abschnitts (12) konfiguriert ist,
- der bewegliche Abschnitt (12) eine Stromübertragungsspule (41) zum Zuführen von elektrischem Strom über eine drahtlose Verbindung zu einer an einem Fahrzeug angebrachten Stromaufnahmespule (22), und eine flache nichtmagnetische Platte (42) umfasst, die an einer Unterseite der Stromübertragungsspule (41) in vertikaler Richtung vorgesehen ist, und
- die nichtmagnetische Platte (42) einen in vertikaler Richtung durchdringenden Durchdringungsabschnitt (60) aufweist,
- wobei das Verfahren umfasst:
- Messen einer Temperatur der Stromübertragungsvorrichtung (300);
- Vergleichen der gemessenen Temperatur mit einem vorläufig eingestellten Schwellenwert zum Ermitteln eines Einfrierens der Stromübertragungsvorrichtung (300), um zu ermitteln, ob die Stromübertragungsvorrichtung (300) eingefroren ist; und
- Erregen der Stromübertragungsspule (41), wenn ermittelt wurde, dass die Stromübertragungsvorrichtung (300) eingefroren ist, und
- wobei die nichtmagnetische Platte (42) einen Durchdringungsabschnitt (60) aufweist, der es einem magnetischen Fluss ermöglicht, von der Stromübertragungsspule (41) in vertikaler Richtung zur Rückseite der nichtmagnetischen Platte (42) auszutreten, um den Hubmechanismus (17) zu erwärmen.

2. Stromübertragungsvorrichtung (300), die auf einer Bodenseite vorgesehen ist, wobei:
- die Vorrichtung (300) umfasst:
- einen beweglichen Abschnitt (12), der zum Aufwärts- und Abwärtsbewegen in Bezug auf den Boden konfiguriert ist;
- einen Hubmechanismus (17), der an einer Unterseite des beweglichen Abschnitts (12) in vertikaler Richtung angeordnet ist und zum Aufwärts- und Abwärtsbewegen des beweglichen Abschnitts (12) konfiguriert ist; und
- einen Sensor, der zum Messen einer Temperatur der Stromübertragungsvorrichtung (300) konfiguriert ist,
- der bewegliche Abschnitt (12) eine Stromübertragungsspule (41) zum Zuführen von elektrischem Strom über eine drahtlose Verbindung zu einer an einem Fahrzeug angebrachten Stromaufnahmespule (22), und eine flache nichtmagnetische Platte (42) umfasst, die an einer Unterseite der Stromübertragungsspule (41) in vertikaler Richtung vorgesehen ist,
- die nichtmagnetische Platte (42) einen in vertikaler Richtung durchdringenden Durchdringungsabschnitt (60) aufweist, und
- die Stromübertragungsspule (41) erregt wird, wenn ermittelt wurde, dass die Stromübertragungsvorrichtung (300) gemäß der vom Sensor gemessenen Temperatur eingefroren ist,
- wobei die nichtmagnetische Platte (42) einen Durchdringungsabschnitt (60) aufweist, der es dem magnetischen Fluss ermöglicht, von der Stromübertragungsspule (41) in vertikaler Richtung zur Rückseite der nichtmagnetischen Platte (42) auszutreten, um den Hubmechanismus (17) zu erwärmen.

3. Stromübertragungsvorrichtung (300) nach Anspruch 2,
- ferner umfassend einen Ferritkern, der zwischen der Stromübertragungsspule (41) und der nichtmagnetischen Platte (42) angeordnet ist,
- wobei der Durchdringungsabschnitt (60) von einer Oberseite des Ferritkerns gesehen teilweise auf einer Innenseite eines Außenumfangs des Ferritkerns angeordnet ist.

4. Stromübertragungsvorrichtung (300) nach Anspruch 2 oder 3, wobei:
- der Hubmechanismus (17) einen Hubabschnitt (46, 47) umfasst, der zum Aufwärts- und Abwärtsbewegen des beweglichen Abschnitts (12) konfiguriert ist; und
- der Durchdringungsabschnitt (60) so angeordnet ist, dass dieser einer Position des Hubabschnitts (46, 47 entspricht.

5. Stromübertragungsvorrichtung (300) nach Anspruch 4, ferner umfassend ein magnetisches Element (48a, 48b), das in Kontakt mit dem Hubabschnitt (46, 47) vorgesehen ist.

6. Strom Übertragungsvorrichtung (300) nach Anspruch 4 oder 5, die ferner einen Deckel (53) umfasst, der so konfiguriert ist, dass dieser den Durchdringungsabschnitt (60) in vertikaler Richtung abdeckt, wenn der bewegliche Abschnitt (12) nach oben bewegt wird.

7. Stromübertragungsvorrichtung (300) nach Anspruch 6, wobei der Deckel (53) im Hubabschnitt (46, 47) vorgesehen ist und so konfiguriert ist, dass dieser synchron mit einer Aufwärtsbewegung des beweglichen Abschnitts (12) betätigt wird, um den Durchdringungsabschnitt (60) in vertikaler Richtung abzudecken.

## Revendications

1. Procédé de dégivrage pour un dispositif de transmission de puissance (300) prévu sur un côté sol, dans lequel :
- le dispositif de transmission de puissance (300) comprend :
- une partie mobile (12) configurée pour monter et descendre par rapport au sol ; et
- un mécanisme d'élévation (17) agencé sur un côté inférieur de la partie mobile (12) dans une direction verticale et configuré pour déplacer la partie mobile (12) vers le haut et vers le bas,
- la partie mobile (12) comprend une bobine de transmission de puissance (41) pour fournir de la puissance électrique via une connexion sans fil à une bobine de réception de puissance (22) montée sur un véhicule, et une plaque amagnétique plate (42) prévue sur un côté inférieur de la bobine de transmission de puissance (41) dans la direction verticale, et
- la plaque amagnétique (42) a une partie de pénétration (60) pénétrant dans la direction verticale,
- le procédé comprend :
- la mesure d'une température du dispositif de transmission de puissance (300) ;
- la comparaison de la température mesurée avec un seuil préalablement fixé pour déterminer un gel du dispositif de transmission de puissance (300) afin de déterminer si le dispositif de transmission de puissance (300) est gelé ; et
- l'excitation de la bobine de transmission de puissance (41) lors de la détermination du fait que le dispositif de transmission de puissance (300) est gelé, et
- dans lequel la plaque amagnétique (42) a une partie de pénétration (60) permettant à un flux magnétique provenant de la bobine de transmission de puissance (41) de fuir dans la direction verticale vers le côté arrière de la plaque amagnétique (42) pour chauffer le mécanisme d'élévation (17).

2. Dispositif de transmission de puissance (300) prévu sur un côté sol, dans lequel :
- le dispositif (300) comprend :
- une partie mobile (12) configurée pour monter et descendre par rapport au sol ;
- un mécanisme d'élévation (17) agencé sur un côté inférieur de la partie mobile (12) dans une direction verticale et configuré pour déplacer la partie mobile (12) vers le haut et vers le bas ; et
- un capteur configuré pour mesurer une température du dispositif de transmission de puissance (300),
- la partie mobile (12) comprend une bobine de transmission de puissance (41) pour fournir de la puissance électrique via une connexion sans fil à une bobine de réception de puissance (22) montée sur un véhicule, et une plaque amagnétique plate (42) prévue sur un côté inférieur de la bobine de transmission de puissance (41) dans la direction verticale,
- la plaque amagnétique (42) a une partie de pénétration (60) pénétrant dans la direction verticale, et
- la bobine de transmission de puissance (41) est excitée lorsque le dispositif de transmission de puissance (300) est déterminé comme étant gelé conformément à la température mesurée par le capteur,
- la plaque amagnétique (42) a une partie de pénétration (60) permettant à un flux magnétique provenant de la bobine de transmission de puissance (41) de fuir dans la direction verticale vers le côté arrière de la plaque amagnétique (42) pour chauffer le mécanisme d'élévation (17).

3. Dispositif de transmission de puissance (300) selon la revendication 2,
- comprenant en outre un noyau en ferrite agencé entre la bobine de transmission de puissance (41) et la plaque amagnétique (42),
- dans lequel la partie de pénétration (60) est partiellement située sur un côté interne d'une circonférence externe du noyau en ferrite telle que vue depuis un côté supérieur du noyau en ferrite.

4. Dispositif de transmission de puissance (300) selon la revendication 2 ou 3, dans lequel :
- le mécanisme d'élévation (17) comprend une partie d'oscillation (46, 47) configurée pour déplacer la partie mobile (12) vers le haut et vers le bas ; et
- la partie de pénétration (60) est située de manière à correspondre à une position de la partie d'oscillation (46, 47).

5. Dispositif de transmission de puissance (300) selon la revendication 4, comprenant en outre un élément magnétique (48a, 48b) prévu en contact avec la partie d'oscillation (46, 47).

6. Dispositif de transmission de puissance (300) selon la revendication 4 ou 5, comprenant en outre un couvercle (53) configuré pour couvrir la partie de pénétration (60) dans la direction verticale lorsque la partie mobile (12) est déplacée vers le haut.

7. Dispositif de transmission de puissance (300) selon la revendication 6, dans lequel le couvercle (53) est prévu dans la partie d'oscillation (46, 47), et est configuré pour fonctionner de manière synchrone avec un mouvement vers le haut de la partie mobile (12) de manière à couvrir la partie de pénétration (60) dans la direction verticale.
